(19) Europäisches Patentamt
European Patent Office
Office européen des brevets

(11) **EP 2 068 327 A1**

(12) **EUROPEAN PATENT APPLICATION**

(43) Date of publication:
**10.06.2009 Bulletin 2009/24**

(51) Int Cl.:
***G21K 4/00*** *(2006.01)*

(21) Application number: **07121587.5**

(22) Date of filing: **27.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Agfa HealthCare NV**
**2640 Mortsel (BE)**

(72) Inventor: **Leblans, Paul**
**2640, Mortsel (BE)**

(54) **Radiation capturing means and method of determining cumulative exposure doses.**

(57)    In a method of determining the cumulative exposure dose as captured by an adapted radiation capturing means therefor, said method comprises the steps of determining the average time lapse between exposure and read-out from ratios of read-out signals after photostimulation or thermostimulation of at least two storage phosphors and calculating the cumulative exposure dose therefrom, provided that said storage phosphors are differing in dark-decay rate.

FIG. 1

Printed by Jouve, 75001 PARIS (FR)

**Description**

FIELD OF THE INVENTION

The present invention relates to a method of determining the cumulative exposure dose, captured by an adapted means, and provides a means useful therefor.

BACKGROUND OF THE INVENTION

Most well-known radiation capturing means are personal dosimeters, used in order to monitor the radiation dose to which people, who work in the neighborhood of radiation sources, are exposed. Generally, such a dosimeter is used for a period of time, after which it is sent in for read-out. Hence, the signal upon read-out of the dosimeter should reflect the accumulated dose to which it was exposed in the complete period in which it was used.

A particular type of dosimetry is patient dosimetry as is known from radiotherapy, more particularly from a less common form of "portal radiography", known as "verification" or "high dose portal" imaging, in order to verify the location of the cell-killing exposure. The purpose of this imaging is to record enough anatomical information to confirm that the cell-killing exposure was properly aligned with the targeted tissue. The imaging film/cassette assembly is kept in place behind the patient for the full duration of the treatment. The term "verification" thus refers to portal imaging that is used to record patient exposure through the port during radiotherapy. Typically, exposure times range from 30 to 300 seconds. Verification films have only a single field, as the lead shields are in place, and are generally imaged at intervals during the treatment regime that may last for weeks. Portal radiographic imaging film, assembly and methods have been described, e.g., in US-A's 5,871,892 and 6,042,986 and in US-Application 2005/0023485 in which the same type of radiographic element can be used for both localization and portal or verification imaging.

Technologies currently in use for personal dosimetry are known to be selected from film and glass with photostimulation crystals, LiF with thermal stimulation, $CaWO_4$, $Al_2O_3$:C with photo-stimulation and electronic dosimetry.

Such a system based on optically stimulated luminescence (OSL) of $Al_2O_3$:C was introduced by Landauer. In US-A 2004/0159803 a method of radiation dosimetry and radiation field imaging is presented, based in that invention on aluminum oxide doped with carbon and magnesium as luminescent material containing aggregate oxygen vacancy defects, storage of dosimetric information is based on ionization of the crystal matrix, generation of free electrons and capture of electrons and holes by traps and color centers. An absorbed dose is determined by non-destructive readout of fluorescence from color centers induced by radiation. The preferred mode of measurements therein is to illuminate the $Al_2O_3$:C,Mg phosphor with a red laser (at 635 nm or 650 nm) and to measure the intensity of 750 nm fluorescence and the said method allows for high temperature and environmental stability of dose information. Moreover the detector material is insensitive to room light before and after the irradiation and provides a fast data rate during scanning for imaging of radiation fields.

However the thermally stimulated luminescence (TSL) or optically stimulated luminescence (OSL) systems do not offer an image, but only offer a dose value.

Film dosimetry has always been known as most versatile system or technology. The dose, energy and exposure mode can be determined, because of the generation of a (latent) image. With respect thereto solid state dosimetry is thus less versatile.

Many OSL materials are known and phosphor chemical compositions can be found in patents related with computed radiography as e.g. US-A's 5,641,583 ; 5,693,254 ; 5,736,069; 5,786,600 ; 5,476,406 ; 6,315,923 ; 6,802,991 ; 6,967,339; 7,161,160 ; 7,170,077 ; 7,180,086; 7,186,996 and 7,276,182 and in patents related with dosimetry as e.g. US-A 6,271,528 ; 6,420,724 ; 6,642,650; 6,452,203 and 6,583,434, without however being limitative.

One problem related with the use of quite a lot of phosphors for dosimetry, however, is the phenomenon called "dark-decay" or "fading". The information stored in the OSL or PSL plates gradually fades, even when the plates are stored in darkness at room temperature.

In personal and patient dosimetry the time between possible radiation exposure and read-out of the dosimeter is not known and can range from a few days to even more than a month. Hence, fading makes it impossible to calculate the dose to which the dosimeter was exposed from the signal obtained upon read-out of the OSL material in a scanner or from the signal obtained in heating the TL material.

Fading may pose a problem when thermally stimulated storage phosphors are used in dosimetry as well.

OBJECTS AND SUMMARY OF THE INVENTION

The object of the present invention is to offer an OSL or PSL based system that provides image formation.

It is another object of the present invention to provide an application for OSL or PSL materials, in radiation capturing means and, more particularly, in personal dosimetry, which is not available today.

It is still an object of the present invention to offer a radiation capturing system that moreover gives an indication of the time period of radiation exposure.

A still further object of the present invention is to offer a method to improve a radiation amount measuring system, based on thermally stimulated luminescence (TSL) materials.

The above-mentioned advantageous effects are realised by providing a radiation dose capturing means having the specific features set out in claim 1, and by providing a method of reading out said capturing means, e.g. a personal dosimeter.

Specific features for preferred embodiments of the invention are set out in the dependent claims.

Further advantages and embodiments of the present invention will become apparent from the following description and drawings.

## BRIEF DESCRIPTION OF THE DRAWINGS

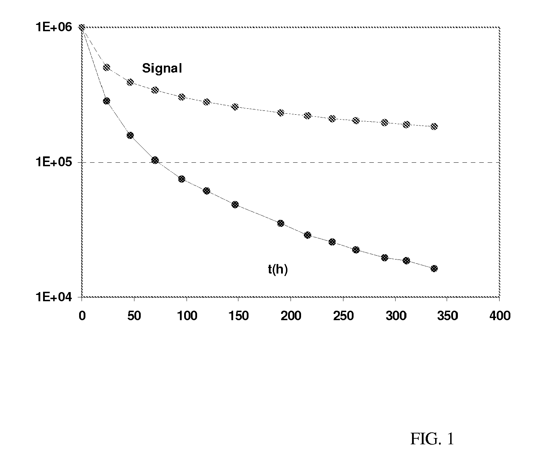

Fig. 1 shows a signal decay of two phosphors with a different fading tendency, indicating the ability to determine the fading time from the signal ratios obtained from reading out said two phosphors.

Fig. 2 shows a typical dark-decay curve of a $BaFX:Eu^{2+}$ storage phosphor plate.

Fig. 3 shows a double-logarithmic plot of a typical dark-decay curve of a $BaFX:Eu^{2+}$ storage phosphor plate and the fitting with a power-law equation.

Fig. 4 shows the exposure evolution, exposure expressed in arbitrary units (a.u), as a function of elapsed time, expressed in days, for the case 2.1 as examplified hereinafter.

## DETAILED DESCRIPTION OF THE INVENTION

A solution for the problem set forth above has been found by providing, according to the present invention, a radiation capturing means comprising at least two photo- or thermo-stimulable storage phosphors, characterised in that said storage phosphors are differing in dark-decay rate.

With respect to the photostimulable storage phosphors present in the radiation capturing means according to the present invention, use is advantageously made of powder phosphor screens, of needle phosphor screens or of phosphor monocrystals. Such phosphors, known from use in computer radiography (CR) for medical X-ray imaging, i.e., in phosphor plates containing a powder phosphor of the $M^{II}FX:A$ family and needle imaging plates, based on $M^IX':A'$ type storage phosphors, X and X'representing at least one of Cl, Br and I in the matrix compound of that photostimulable phosphor, and A and A' representing at least one lanthanide as an activator in the formulae of these photostimulable phosphors, have been selected now as OSL materials. These phosphors, known as photostimulable luminescent or PSL phosphor materials, have been shown to be particularly suitable for use in the radiation capturing means of the present invention and in the method of determining the cumulative exposure dose, captured by the said radiation capturing means, provided that said radiation capturing means comprises at least two of said storage phosphors, wherein said storage phosphors are differing in dark-decay rate. $M^{II}FX:Eu^{2+}$ (X = Br, I) and the more recently developed $CsBr:Eu^{2+}$ type photostimulable phosphors have been shown to be excellent candidates for use in personal dosimetry and patient dosimetry, because of their very high sensitivity and their very large dynamic range from very small to very high doses.

In the radiation capturing means according to the present invention, said at least two photostimulable storage phosphors are thus, in one embodiment, represented by the general formula (I), $M^{II}FX:A$ (I), wherein X represents at least one of Cl, Br or I, and wherein A represents one or a combination of lanthanides, present as one or more activators selected from the group consisting of La, Ce, Pr, Nd, Pm, Eu, Gd, Tb, Dy, Ho, Er, Tm, Yb and Lu; and wherein $M^{II}$ represents an alkaline earth metal selected from the group consisting of Ba, Sr, Ca and Mg or a combination thereof.

It is moreover not excluded that minor amounts of an alkali metal ion or a combination of alkali metal ions are present in at least one of the at least two photostimulable storage phosphors, represented by the general formula (I).

In another embodiment in a radiation capturing means according to the present invention, said at least two photostimulable storage phosphors are represented by the general formula (II), $M^IX':A'$ (II), wherein X' represents at least one of Cl, Br or I, and wherein A' represents one or a combination of lanthanides, present as one or more activators selected from the group consisting of La, Ce, Pr, Nd, Pm, Eu, Gd, Tb, Dy, Ho, Er, Tm, Yb and Lu; and wherein $M^I$ represents an alkali metal selected from the group consisting of Cs, Rb, K and Na or a combination thereof.

It is moreover not excluded that minor amounts of an alkaline earth metal ion or a combination of alkaline earth metal ions are present in at least one of the at least two photostimulable storage phosphors, represented by the general formula (II).

In a particular embodiment thereof, according to the present invention, the radiation capturing means comprises at least two photostimulable storage phosphors have substantially the same chemical composition. So properties of storage phosphors suitable for being used in OSL dosimeters may e.g. be altered by an annealing treatment, whether obtained by heating or by radiation.

With respect to thermo-stimulable storage phosphors present in the radiation capturing means according to the present invention, use is made of thermally stimulable luminescent phosphors (TSL phosphors), with different emission colors.

In a further embodiment the radiation capturing means according to the present invention, comprises at least two thermo-stimulable storage phosphors, wherein said at least two thermostimulable storage phosphors are selected from the group consisting of LiF:Mg,Ti; LiF:Mg,Ti,Na; LiF:Mg,Cu,P; $Li_2B_4O_7$:Mn; $Li_2B_4O_7$:Cu; $MgB_4O_7$:Dy; $Mg_2SiO_4$:Tb; $CaSO_4$:Dy; $CaSO_4$:Tm; $CaSO_4$:Eu; $CaSO_4$:Mn; $CaF_2$:Mn; $CaF_2$:Dy; natural $CaF_2$; $CaWO_4$:Dy; $CaWO_4$:Er; $CaWO_4$:Eu; $CaWO_4$:Tb; BeO; $Al_2O_3$ and ZnS:Mn,Cu.

In a particular embodiment thereof, according to the present invention, the radiation capturing means comprises at least two thermostimulable storage phosphors have substantially the same chemical composition. So properties of storage phosphors suitable for being used in TSL dosimeters may e.g. be altered by thermal treatment.

In a further embodiment of the present invention read-out of the storage phosphors of the types disclosed hereinbefore thus proceeds with or without prior annealing.

In a still further embodiment read-out of the said storage phosphors of the types disclosed hereinbefore, present in a screen or plate in the radiation capturing means of the present invention, proceeds by optical stimulation in a flying-spot scanner, in a line scanner, in an area scanner (flat field) or by thermal stimulation.

The radiation capturing means according to the present invention further is in form of a dosimeter suitable for use in medical, military and scientific applications, thereby providing ability to capture X-rays, $\gamma$-rays, $\beta$-rays, $\alpha$-rays, neutron rays and ultraviolet radiation.

According to the present invention, with respect to the method of determining the cumulative exposure dose captured by the radiation capturing means according to the present invention as disclosed above, said method comprises the steps of determining the average time lapse between exposure and read-out from ratios of read-out signals after photostimulation of at least two of said storage phosphors and calculating the cumulative exposure dose therefrom.

According to the method of the present invention, said cumulative exposure dose is calculated from a power-law equation, describing dark-decay curves for the said storage phosphors.

So according to the method of the present invention, read-out signals are obtained from stimulating radiation, applied while scanning said storage phosphors, after having annealed said storage phosphors before being scanned.

Moreover in the method of determining the cumulative exposure dose, captured by a radiation capturing means as disclosed hereinbefore, the method of the present invention comprises the steps of determining the average time lapse between exposure and read-out from ratios of read-out signals after thermostimulation of two of said storage phosphors and calculating the cumulative exposure dose therefrom.

In a particular embodiment according to the method of the present invention, said read-out signals are registered at different emission wavelengths.

In the method according to the present invention, said cumulative exposure dose is further calculated from a power-law equation, describing dark-decay curves for said storage phosphors, as will be illustrated hereinafter in the description and in the Examples.

So the signal ratio obtained in the (at least) two different phosphors is an indication of the (average) time elapsed between exposure and read-out.

Based on this time lapse between exposure and read-out, a correction can be made for the signal loss due to dark-decay and the exposure dose can be calculated with high accuracy.

The dose calculation is exact if the radiation capturing means according to the present invention is exposed to radiation at one instance only. For this case, an additional benefit of the use of two phosphors with different fading is that the time of exposure can be calculated in addition to the radiation exposure dose. However, even for more or less regular multiple exposures the accumulated dose can be calculated with very high accuracy.

So it has e.g. been observed that the dark-decay behaviour of many storage phosphors of the BaFX:$Eu^{2+}$ (X = Cl, Br, I) type or family can be described with a power-law equation.

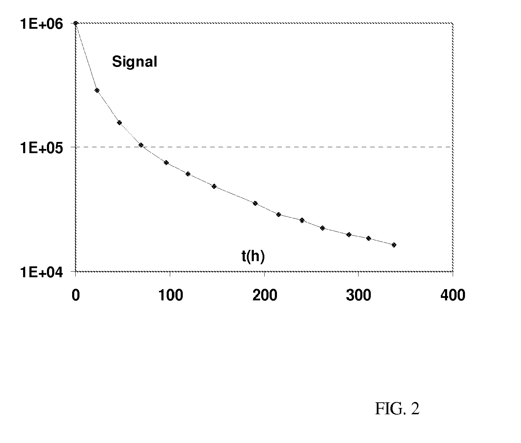

The dark-decay curve of e.g. the Fuji BAS-TR storage phosphor plate scanned with the BAS-5000 digitizer at 40°C is given in Fig. 6, p.580 of "H. Ohuchi et al., Nuclear Instruments and Methods in Physics Research A 490 (2002)". Fig. 2 is a representation of a single logarithmic plot of the data from that publication, showing a typical dark-decay curve of a BaFX:$Eu^{2+}$ storage phosphor plate.

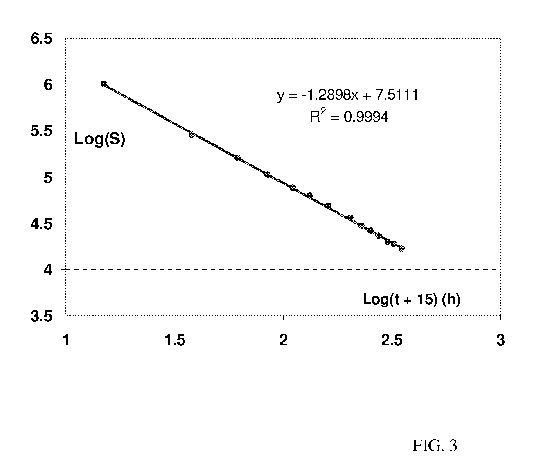

The data of Fig. 2 were fitted with a power-law equation. It is evident from the fit in the double-logarithmic curve, as illustrated in Fig. 3 that an excellent reproduction of the experimental data is possible with this type of equation.

Thus, it turns out that a very good mathematical description of the dark-decay curve is possible indeed with the following equation:

$$S = 3.24 \ 10^7 \ x \ (t + 15)^{-1.29} \qquad (1),$$

wherein S is the signal obtained in a scan of the storage phosphor plate and t is the time lapse between exposure and read-out in hours.

Therefore, in the following, the dark-decay behaviour of a storage phosphor plate will be described by the general equation:

$$S = S_0 \ x \ (t + t_0)^{-n} \qquad (2),$$

wherein $t_0$ and n are constants, specific for the material.

In a further embodiment of the present invention use may be made of other mathematical formulae in order to describe dark-decay characteristics as there are e.g. polynomial, single or multiple exponentials and multiple power laws, without however being limited thereto.

With respect to radiation dosimetry as a particular application technique, related with the present invention, it is known that different applications require different types thereof. Active dosimetry including gas counters, scintillator detectors and electronic dosimeters based on p-i-n semiconductor diodes allow for instant monitoring of radiation dose and dose rates, but are relatively expensive. Passive radiation detectors and techniques for measuring the acquired doses are simpler and provide less expensive solutions for low risk radiation environments. Some currently used passive detector technologies are e.g. photographic and photochromic films, radio-photoluminescent (RPL) glasses, thermoluminescent detectors (TLD) and optically stimulated luminescent (OSL) detectors. The first three technologies allow for non-destructive and multiple read-out but do not provide high sensitivity of radiation dose measurements. The last two (TLD and OSL) provide extremely high sensitivity and wide dynamic range but the readout is destructive. A technique for radiation dosimetry using a luminescent material and, more specifically, a method of determining a dose of X-rays, gamma ($\gamma$)-, and beta($\beta$)-radiation using a luminescent material and a fluorescent readout technique, have been described in US-A 2004/159803, the contents of which is entered in its entirety by reference herein. Goals of that invention include utilization of new radiation sensitive luminescent materials and optical measurement techniques that provide simultaneously high sensitivity and non-destructive multiple readout, temperature stability of information up to 600°C, essentially no sensitivity to ambient light and at the same time capability for optical and thermal erasure of stored information as most important advantages when comparing the present invention with known dosimetry techniques as e.g. (1) radio-photoluminescent glasses (RPL) stimulated with short UV pulses as a non-destructive way to perform dosimetric measurements when extremely high sensitivity is not required and total accumulated dose has to be monitored non-destructively and wherein time-discrimination techniques and highly polished glass detectors are required, as e.g. described in E. Piesch et al., "Properties of radiophotoluminescent glass dosimeter systems using pulsed laser UV excitation," Radiat. Prot. Dosim. v. 17, p. 293-297 (1986), the entire contents and disclosures of which are hereby incorporated by reference too; (2) thermoluminescent dosimetry (TLD used for personnel radiation monitoring and medical doses verification, being a destructive technique, requiring heating of a detector, reacting slowly and being not suitable for high spatial resolution imaging) utilizing crystalline and glass materials able to trap electrons and holes generated within the detector during irradiation, storing dosimetric information for a long time, wherein in order to measure an accumulated dose a TL detector is heated in a reader, further emitting a luminescent light in an amount that is proportional to the absorbed dose; and (3) Optically Stimulated Luminescence (OSL) utilizing materials and electronic processes similar to TLD but wherein interrogation of the detector is performed by light instead of heat, wherein precise delivery of light, simpler readers and fast readout times are the main advantages of OSL in comparison with TLD. Whereas OSL allows for reread of the detector several times, it is still considered to be a destructive technique.

With respect to TSL dosimetry, desired applications are in the field of personal dosimetry (in body tissue), environmental dosimetry (in ambient air) and in the field of medical applications (as in radiation image applications and in radiation therapy), without however being limited thereto.

As one particular application "personal dosimetry" is concerned with the assessment and limitation of the radiation dose delivered to individuals. The purpose is to restrict the dose absorbed by a person to below recommended limits, corresponding with dose-equivalent values which are expected not to cause injury to the person during his or her working lifetime. Tissues at risk during irradiation of an individual include the skin, the gonads, lungs, thyroid, bone surface and bone marrow stam cells, as well as breasts in females. Skin dosimeters used in personal dosimetry may thus be classified according to their primary function, i.e. skin dosimeters and body dosimeters.

As another particular application "environmental dose monitoring" is concerned with the measurement of natural radioactivity arising from radioactive materials present in surrounding atmosphere and from cosmic rays. Detector materials in environmental dosimeters require a different set of performance characteristics, if compared with those used in personal dosimetry. Such dosimeters thus measure much lower dose levels, requiring higher sensitivities, and measurements are spread out over a much longer period of time in the range from months to years. Resistance to moisture and chemicals is of utmost importance therefore, from a point of view of long term stability. Dosimeters for environmental dosimetry most often make use of e.g. $CaSO_4$:Dy and $CaF_2$- Calcium sulphate based low dose detectors as those, having been described e.g. in US-A 6,586,752, can be manufactured in various forms, are easily handled, and find numerous applications in personnel (used as an element whose assemblage constitutes a personnel dosimeter badge for monitoring personnel radiation dose equivalent) and environmental monitoring fields as in urgent environmental radioactive management, and in radiotherapy too.

Other particularly useful phosphor materials are $Li_2B_4O_7$:Mn and LiF-type phosphors which are able to cover a wide range of medical applications. So called "in vivo" dosimetry wants to verify the dose delivered to a patient during radiotherapy or diagnostic radiology and is classified in four different kinds of measurements:

1. Entrance dose measurement resulting from the radiation output source, the distribution across the patient and the position of any shielding.
2. Exit dose measurement aiming to check the dose absorbed by the body of the patient.
3. Intracavitary dose measurement to directly measure the dose delivered to a particular body cavity.
4. Spared organ dose measurement to assess the dose delivered to shielded organs.

Phantom measurements are a further particularly useful tool, providing ability to simulate real effects, inclusive for e.g. backscattering, by using the dosimeter in a phantom. $Li_2B_4O_7$:Mn as a powder phosphor is known as being a very suitable phosphor therefore.

Dosimeters mentioned above are particularly suitable for use in the present invention as radiation capturing means, provided that, according to the statement of the present invention, at least two thermo-stimulable storage phosphors are present, wherein said storage phosphors are differing in dark-decay rate.

The performance of dosimeters is assessed by examining properties such as linearity, isotropy, effect of environment on dosimeter performance, batch inhomogeneity, and others.

In medical applications measurement of absorbed dose during radiotherapy and diagnostic radiology is a well-known application. In radiotherapy treatment irradiation of cancerous tissue with a precise dose of radiation is envisaged, thereby ensuring surrounding healthy tissue to be irradiated to a level, kept at a minimum.

Miscellaneous applications related with the present invention are thermoluminescence dating, providing calculation of the age of a specimen; special dating applications as e.g. sediments, stones, rocks, shells, bones and teeth, as well as authenticity testing.

Moreover, geological applications as in mineralogy, providing e.g. dating and determination of compositions of e.g. meteorites, are of particular interest. Particular terrestrial geological applications are e.g. shock detection, geothermometry and paleothermometry, prospecting (e.g. in the vicinity of - radioactive - ore mines or fields), study of strata and the like.

More details with respect to the description given above can be found in McKeever's "Thermoluminescence of solids", Cambridge University Press, 1985, Cambridge, Great Britain, the contents of which is incorporated herein by reference.

While the present invention will hereinafter be described in connection with preferred embodiments thereof, it will be understood that it is not intended to limit the invention to those embodiments.

Examples

As an example two phosphors were considered, having both dark-decay characteristics differing from each other, as described by the general equation (2), $S = S_0 \times (t + t_0)^{-n}$, wherein, as disclosed hereinbefore in the detailed description, to and n are constants, specific for the material.

Since the ratio of signal to read-out of the phosphors is proportional to the radiation dose, D, the normalised signal is given by the formula (3) hereinafter:

$$S = D \times (t + t_0)^{-n} \qquad\qquad (3)$$

For mathematical symplicity, it has been assumed that $t_0$ is equal for both phosphors, and that only the power "n" in the equation is specific to the material. It is clear, however, that the general approach described in this patent also works if $t_0$ is different for the two phosphors and even if a different type of equation must be used to fit the phosphor dark-decay curve.

It has further been assumed that to = 15 hours and that two phosphors were used with the following fading characteristics:

Material 1: The signal drops to 70% of the original signal in 30 days
Material 2: The signal drops to 50% of the original signal in 30 days.

Under these conditions the dark-decay of the 2 materials can be described by the formulae (4) and (5) hereinafter:

$$S_1 = D \times (t + 15)^{-n1} \qquad (4)$$

$$S_2 = D \times (t + 15)^{-n2} \qquad (5)$$

with $n_1$ = 0.104 and $n_2$ = 0.203.

Following cases have now been considered.

Case 1 (single exposure):

If the dosimeter was exposed in one instance only, the exact time lapse between exposure and read-out can be calculated, making use of the following equation:

$$t = (S_1/S_2)^{1/(n2-n1)} - t_0 \qquad\qquad (6)$$

and the dose can be calculated from both $S_1$ and $S_2$ as:

$$D = S_1 \times (t + t_0)^{n1} = S_2 \times (t + t_0)^{n2} \qquad\qquad (7)$$

Cases 2.1 - 2.4 (multiple exposures):

In the following examples the accumulated dose D, expressed as a figure, has been given over a period of time t(in days) in 2 or more portions.

In case of multiple exposures, the same equations (6) and (7) can be used as for a single radiation exposure. In this case, since there is not just one instance of exposure, the time lapse between exposure and read-out could be considered as an average time and the accumulated dose is not exact in a mathematical sense. But as the data below demonstrate, the error on the calculated accumulated dose is very small. For the examples given herein, the error was always less than 1.5% and, more in general, even less than 1%.

Case 2.1.

The dose is applied in 15 portions and the time lapse between read-out and exposure is given in days in the table (and figure) below. Moreover, the exposure dose is given in arbitrary units (a.u.).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 7 | 3 | 5 | 10 | 4 | 12 | 3 | 3 | 6 | 12 | 3 | 4 | 7 | 9 | 12 |

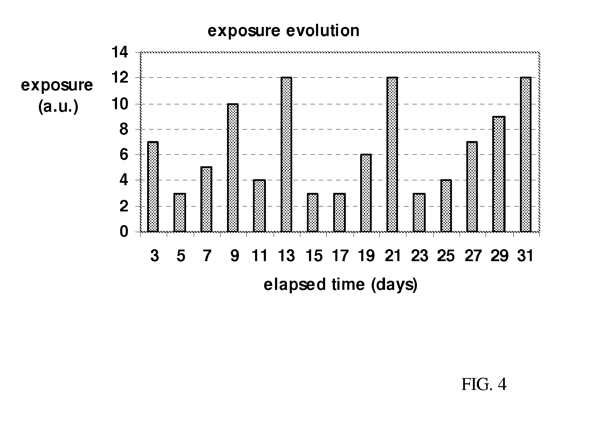

The accumulated dose in this example and in the following examples is the summation of the individual doses and is 100 (arbitrary units). In Fig.4 this relation has been set out in a diagram, thus showing the exposure evolution, said exposure evolution being expressed in arbitrary units (a.u), as a function of elapsed time, said time being expressed in days.
The signals obtained from the 2 storage phosphors can be calculated with the following formulae (8) and (9):

$$S_1 = \sum_i D_i \times (t_i + 15)^{-n1} \qquad (8)$$

$$S_2 = \sum_i D_i \times (t_i + 15)^{-n2} \qquad (9)$$

For a total dose D of 100 and signals S1 = 75.3 and S2 = 58.0 respectively in this case 2.1, a calculation learns that:

$$t_a = (S_1/S_2)^{1/(n2-n1)} - t_0 = 14.2 \text{ days}$$

and that D equals:

$$D = S_1 \times (t_a + t_0)^{n1} = S_2 \times (t_a + t_0)^{n2} = 99.5$$

i.e., with the relative error with respect to the real accumulated dose of -0.5 %. The parameter $t_a$ therein stands for "average time" and is determined as the average time lapse between exposure and read-out, as calculated from ratios of read-out signals after photostimulation of the two storage phosphors, present in the detector.

Case 2.2. Equal exposures with a time interval of 1 day

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | $6^{2/3}$ | = | = | = | = | = | = | = | = | = | = | = | = | = | = |

For a total dose D of 100 and signals $S_1$ = 76.6 and $S_2$ = 59.9 respectively in this case wherein exposures were equal and with time intervals of 1 day, a calculation learns that $t_a$ = 11.9 days and that D equals 99.4, i.e. with a relative error of -0.6%.

Case 2.3. Equal doses added after a time interval of 8 days

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|

(continued)

| t | 3 | 5 | 7 | 9 | 11 | 13 | 15 | 17 | 19 | 21 | 23 | 25 | 27 | 29 | 31 |
|---|---|---|---|---|---|---|---|---|---|---|---|---|---|---|---|
| D | 25 | 0 | 0 | 0 | 25 | 0 | 0 | 0 | 25 | 0 | 0 | 0 | 25 | 0 | 0 |

For a total dose D of 100 and signals $S_1$ = 77.8 and $S_2$ = 61.8, respectively, in this case wherein equal doses, wherein exposures were equal and with time intervals of 8 days, a calculation learns that $t_a$ = 10.2 days and that D equals 99.2, i.e. with a relative error of -0.8%.

Case 2.4. Equal doses added after a time interval of 2 weeks

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 0 | 0 | 0 | 50 | 0 | 0 | 0 | 0 | 0 | 0 | 0 | 50 | 0 | 0 | 0 |

For a total dose D of 100 and signals $S_1$ = 75.4 and $S_2$ = 57.9, respectively, in this case, wherein exposures were equal and with time intervals of 2 weeks, a calculation learns that $t_a$ = 14.4 days and that D equals 99.7, i.e. with a relative error of -0.3% .

Cases 3.1 - 3.4 (decreasing exposure doses with time interval):

In the following examples the dose D, expressed as a figure, has been given as a function of time t(in days), wherein (going backwards in time) a decreasing exposure dose is applied within equal time intervals.
Calculations have been given as described hereinbefore.

Case 3.1 (within a time interval of 2 days).

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 14 | 13 | 12 | 11 | 9.5 | 8.5 | 7.5 | 6.5 | 5.5 | 4.5 | 3.5 | 2.5 | 1.5 | 0.5 | 0 |

For a total dose D of 100 and signals $S_1$ = 79.4 and $S_2$ = 64.1, respectively, in this case 3.1, a calculation learnt that $t_a$ = 8.7 days and that D equals 99.5, i.e. with a relative error of -0.5%.

Case 3.2 (within a time interval of 4 days).

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 27 | 0 | 23 | 0 | 18 | 0 | 14 | 0 | 10 | 0 | 6 | 0 | 2 | 0 | 0 |

For a total dose D of 100 and signals $S_1$ = 80.4 and $S_2$ = 65.8, respectively, in this case 3.2, a calculation learnt that $t_a$ = 7.6 days and that D equals 99.5 , i.e. with a relative error of -0.5%.

Case 3.3 (within a time interval of 8 days).

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 40 | 0 | 0 | 0 | 30 | 0 | 0 | 0 | 20 | 0 | 0 | 0 | 10 | 0 | 0 |

For a total dose D of 100 and signals $S_1$ = 80.7 and $S_2$ = 66.5, respectively, in this case 3.3, a calculation learnt that $t_a$ = 7.2 days and that D equals 99.2, i.e. with a relative error of -0.8%.

Case 3.4 (within a time interval of 14 days).

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 0 | 0 | 0 | 66.67 | 0 | 0 | 0 | 0 | 0 | 0 | 0 | 33.33 | 0 | 0 | 0 |

For a total dose D of 100 and signals $S_1$ = 76.7 and $S_2$ = 59.9, respectively, in this case 3.4, a calculation learnt that $t_a$ = 12.2 days and that D equals 99.8, i.e. with a relative error of -0.2%.

Cases 4.1 - 4.4 (increasing exposure doses with time interval):

In the following examples the dose D, expressed as a figure, has been given as a function of time t(in days), wherein a increasing exposure dose is applied within varying time intervals.
Calculations have been given as described hereinbefore.

Case 4.1 (within a time interval of 2 days).

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 0 | 0.5 | 1.5 | 2.5 | 3.5 | 4.5 | 5.5 | 6.5 | 7.5 | 8.5 | 9.5 | 11 | 12 | 13 | 14 |

For a total dose D of 100 and signals $S_1$ = 72.5 and $S_2$ = 53.6 respectively in this case 4.1, a calculation learnt that $t_a$ = 21.1 days and that D equals 99.9, i.e. with a relative error of -0.1%.

Case 4.2 (within a time interval of 4 days).

| i | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| t | 3 | 5 | 7 | 9 | 11 | 13 | 15 | 17 | 19 | 21 | 23 | 25 | 27 | 29 | 31 |
| D | 0 | 0 | 2 | 0 | 6 | 0 | 10 | 0 | 14 | 0 | 18 | 0 | 23 | 0 | 27 |

For a total dose D of 100 and signals $S_1$ = 72.2 and $S_2$ = 53.1 respectively in this case 4.2, a calculation learnt that $t_a$ = 22.1 days and that D equals 99.9, i.e. with a relative error of -0.1%.

Case 4.3 (within a time interval of 8 days).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 0 | 0 | 10 | 0 | 0 | 0 | 20 | 0 | 0 | 0 | 30 | 0 | 0 | 0 | 40 |

For a total dose D of 100 and signals $S_1$ = 72.7 and $S_2$ = 53.9 respectively in this case 4.3, a calculation learnt that $t_a$ = 20.4 days and that D equals 99.8, i.e. with a relative error of -0.2%.

Case 4.4 (within a time interval of 14 days).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 0 | 0 | 33.33 | 0 | 0 | 0 | 0 | 0 | 0 | 0 | 0 | 66.67 | 0 | 0 | 0 |

For a total dose D of 100 and signals $S_1$ = 74.0 and $S_2$ = 55.9 respectively in this case 4.4, a calculation learnt that $t_a$ = 17.1 days and that D equals 99.7, i.e. with a relative error of -0.3%.

Cases 5.1 - 5.5 (2 exposure doses with large time interval):

In the following examples the dose D, expressed as a figure, has been given as a function of time t(in days), wherein two exposure dose are applied within varying large time intervals, with decreasing doses.
Calculations have been given as described hereinbefore.

Case 5.1 (equal exposures within a time interval of 4 weeks).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 50 | 0 | 0 | 0 | 0 | 0 | 0 | 0 | 0 | 0 | 0 | 0 | 0 | 0 | 50 |

For a total dose D of 100 and signals $S_1$ = 79.4 and $S_2$ = 64.8 respectively in this case 5.1, a calculation learnt that $t_a$ = 7.8 days and that D equals 98.6, i.e. with a relative error of -1.4%.

Case 5.2 (linearly decreasing exposure doses within a time interval of 4 weeks: ratio 6:4).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 60 | 0 | 0 | 0 | 0 | 0 | 0 | 0 | 0 | 0 | 0 | 0 | 0 | 0 | 40 |

For a total dose D of 100 and signals $S_1$ = 81.4 and $S_2$ = 67.8, respectively, in this case 5.2, a calculation learnt that $t_a$ = 6.3 days and that D equals 98.7, i.e. with a relative error of -1.3%.

Case 5.3 (linearly decreasing exposure doses within a time interval of 4 weeks: ratio 7:3).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 70 | 0 | 0 | 0 | 0 | 0 | 0 | 0 | 0 | 0 | 0 | 0 | 0 | 0 | 30 |

For a total dose D of 100 and signals $S_1$ = 83.3 and $S_2$ = 70.9, respectively, in this case 5.3, a calculation learnt that $t_a$ = 5.1 days and that D equals 98.9, i.e. with a relative error of -1.1%.

Case 5.4 (linearly decreasing exposure doses within a time interval of 4 weeks: ratio 8:2).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 80 | 0 | 0 | 0 | 0 | 0 | 0 | 0 | 0 | 0 | 0 | 0 | 0 | 0 | 20 |

For a total dose D of 100 and signals $S_1$ = 85.2 and $S_2$ = 73.9, respectively, in this case 5.4, a calculation learnt that $t_a$ = 4.2 days and that D equals 99.2, i.e. with a relative error of -0.8%.

Case 5.5 (linearly decreasing exposure doses within a time interval of 4 weeks: ratio 9:1).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 90 | 0 | 0 | 0 | 0 | 0 | 0 | 0 | 0 | 0 | 0 | 0 | 0 | 0 | 10 |

For a total dose D of 100 and signals $S_1$ = 87.2 and $S_2$ = 76.9, respectively, in this case 5.5, a calculation learnt that $t_a$ = 3.5 days and that D equals 99.6, i.e. with a relative error of -0.4%.

Cases 6.1 - 6.4 (2 exposure doses with large time interval):

In the following examples the dose D, expressed as a figure, has been given as a function of time t(in days), wherein two exposure dose are applied within varying large time intervals, with increasing doses.
Calculations have been given as described hereinbefore.

Case 6.1 (increasing exposures within a time interval of 4 weeks: ratio 4:6).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 40 | 0 | 0 | 0 | 0 | 0 | 0 | 0 | 0 | 0 | 0 | 0 | 0 | 0 | 60 |

For a total dose D of 100 and signals $S_1$ = 77.5 and $S_2$ = 61.8, respectively, in this case 6.1, a calculation learnt that $t_a$ = 9.9 days and that D equals 98.6, i.e. with a relative error of - 1.4%.

Case 6.2 (increasing exposures within a time interval of 4 weeks: ratio 3:7).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 30 | 0 | 0 | 0 | 0 | 0 | 0 | 0 | 0 | 0 | 0 | 0 | 0 | 0 | 70 |

For a total dose D of 100 and signals $S_1$ = 75.6 and $S_2$ = 58.7, respectively, in this case 6.2, a calculation learnt that $t_a$ = 12.7 days and that D equals 98.7, i.e. with a relative error of -1.3%.

Case 6.3 (increasing exposures within a time interval of 4 weeks: ratio 2:8).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 20 | 0 | 0 | 0 | 0 | 0 | 0 | 0 | 0 | 0 | 0 | 0 | 0 | 0 | 80 |

For a total dose D of 100 and signals $S_1$ = 73.6 and $S_2$ = 55.7, respectively, in this case 6.3, a calculation learnt that $t_a$ = 16.7 days and that D equals 98.9, i.e. with a relative error of - 1.1%.

Case 6.4 (increasing exposures within a time interval of 4 weeks: ratio 1:9).

| i | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| t | 3 | 5 | 7 | 9 | 11 | 13 | 15 | 17 | 19 | 21 | 23 | 25 | 27 | 29 | 31 |
| D | 10 | 0 | 0 | 0 | 0 | 0 | 0 | 0 | 0 | 0 | 0 | 0 | 0 | 0 | 90 |

For a total dose D of 100 and signals $S_1$ = 71.7 and $S_2$ = 52.7, respectively, in this case 6.4, a calculation learnt that $t_a$ = 22.5 days and that D equals 99.4, i.e. with a relative error of -0.6%.

For the examples given hereinbefore it has thus been confirmed that the percentage deviation is always less than 1.5% and, in most cases, even less than 1%.

It is important to take notice of the fact that this invention is suitable for use in any application, wherein a radiation dose any living being, any material, any apparatus, and anything without limitation, becomes exposed to within a certain time interval, should be determined, wherein said radiation dose is in the range from hours to years. Such applications, without being limitative, are, e.g. environmental radiation measurement, scientific applications (as in space or in nuclear power stations), military applications (nuclear installations, nuclear weapons,and nuclear war), medical applications (all applications wherein radiation exposures are required) and any application wherein people become exposed to radiation, as in the applications mentioned hereinbefore. The present invention can be succesfully applied for any type of radiation as e.g. X-rays, γ-rays, β-rays, α-rays, neutron rays and ultraviolet radiation.

Having described in detail preferred embodiments of the current invention, it will now be apparent to those skilled in the art that numerous modifications can be made therein without departing from the scope of the invention as defined in the appending claims.■

## Claims

1. A radiation capturing means comprising at least two photo- or thermo-stimulable storage phosphors, **characterised in that** said storage phosphors are differing in dark-decay rate.

2. A radiation capturing means according to claim 1, wherein said at least two photostimulable storage phosphors are represented by the general formula (I), $M^{II}FX:A$ (I), wherein X represents at least one of Cl, Br or I, and wherein A represents one or a combination of lanthanides, present as one or more activators selected from the group consisting of La, Ce, Pr, Nd, Pm, Eu, Gd, Tb, Dy, Ho, Er, Tm, Yb and Lu; and wherein $M^{II}$ represents an alkaline earth metal selected from the group consisting of Ba, Sr, Ca and Mg or a combination thereof.

3.  A radiation capturing means according to claim 1, wherein said at least two photostimulable storage phosphors are represented by the general formula (II), $M^I X':A'$ (II), wherein X' represents at least one of Cl, Br or I, and wherein A' represents one or a combination of lanthanides, present as one or more activators selected from the group consisting of La, Ce, Pr, Nd, Pm, Eu, Gd, Tb, Dy, Ho, Er, Tm, Yb and Lu; and wherein $M^I$ represents an alkali metal selected from the group consisting of Cs, Rb, K and Na or a combination thereof.

4.  A radiation capturing means according to claim 1, wherein said at least two thermostimulable storage phosphors are selected from the group consisting of LiF:Mg,Ti; LiF:Mg,Ti,Na; LiF:Mg,Cu,P; $Li_2B_4O_7$:Mn; $Li_2B_4O_7$:Cu; $MgB_4O_7$:Dy; $Mg_2SiO_4$:Tb; $CaSO_4$:Dy; $CaSO_4$:Tm; $CaSO_4$:Eu; $CaSO_4$:Mn; $CaF_2$:Mn; $CaF_2$:Dy; natural $CaF_2$; $CaWO_4$:Dy; $CaWO_4$:Er; $CaWO_4$:Eu; $CaWO_4$:Tb; BeO; $Al_2O_3$ and ZnS:Mn,Cu.

5.  A radiation capturing means according to any one of the claims 1 to 4, wherein said at least two photostimulable or thermo-stimulable storage phosphors have substantially the same chemical composition.

6.  A radiation capturing means according to any one of the claims 1 to 5, wherein said radiation capturing means is in form of a dosimeter suitable for use in medical, military and scientific applications, thereby providing ability to capture X-rays, $\gamma$-rays, $\beta$-rays, $\alpha$-rays, neutron rays and ultraviolet radiation.

7.  Method of determining the cumulative exposure dose, captured by a radiation capturing means according to any one of the claims 1 to 6, said method comprising the steps of determining the average time lapse between exposure and read-out from ratios of read-out signals after photostimulation of at least two of said storage phosphors and calculating the cumulative exposure dose therefrom.

8.  Method according to claim 7, wherein said cumulative exposure dose is calculated from a power-law equation, describing dark-decay curves for the said storage phosphors.

9.  Method according to claim 7 or 8, wherein read-out signals are obtained from stimulating radiation, applied while scanning said storage phosphors, after having annealed said storage phosphors before being scanned.

10. Method of determining the cumulative exposure dose, captured by a radiation capturing means according to any one of the claims 1 to 6, said method comprising the steps of determining the average time lapse between exposure and read-out from ratios of read-out signals after thermostimulation of two of said storage phosphors and calculating the cumulative exposure dose therefrom.

11. Method according to claim 10, wherein said read-out signals are registered at different emission wavelengths.

12. Method according to claim 10 or 11, wherein said cumulative exposure dose is calculated from a power-law equation, describing dark-decay curves for said storage phosphors.■

FIG. 1

FIG. 2

$y = -1.2898x + 7.5111$

$R^2 = 0.9994$

FIG. 3

FIG. 4

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/01479 A (AGFA GEVAERT NV [BE]; LEBLANS PAUL [BE]) 18 January 1996 (1996-01-18) * page 7 * * claims 1,5,6 * ----- | 1-3,5 | INV. G21K4/00 |
| X | DE 36 28 511 A1 (LEROUX ROLAND [DE]) 3 March 1988 (1988-03-03) * page 3, lines 1-50 * * page 4, lines 57-63 * * claims 1-4 * ----- | 1,4-6 | |
| A | US 3 484 605 A (ATTIX FRANK H) 16 December 1969 (1969-12-16) * the whole document * ----- | 1-12 | |
| | | | TECHNICAL FIELDS SEARCHED (IPC) |
| | | | G21K G01T C09K |

The present search report has been drawn up for all claims

| Place of search | Date of completion of the search | Examiner |
|---|---|---|
| The Hague | 28 May 2008 | Mehdaoui, Imed |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 07 12 1587

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2008

| Patent document cited in search report | | Publication date | Patent family member(s) | | Publication date |
|---|---|---|---|---|---|
| WO 9601479 | A | 18-01-1996 | DE | 69502832 D1 | 09-07-1998 |
| | | | DE | 69502832 T2 | 14-01-1999 |
| | | | JP | 2000505886 T | 16-05-2000 |
| | | | JP | 3220465 B2 | 22-10-2001 |
| | | | JP | 3390751 B2 | 31-03-2003 |
| | | | JP | 2002022897 A | 23-01-2002 |
| | | | US | 5886354 A | 23-03-1999 |
| DE 3628511 | A1 | 03-03-1988 | NONE | | |
| US 3484605 | A | 16-12-1969 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5871892 A
- US 6042986 A
- US 20050023485 A
- US 20040159803 A, Landauer
- US 5641583 A
- US 5693254 A
- US 5736069 A
- US 5786600 A
- US 5476406 A
- US 6315923 A
- US 6802991 A
- US 6967339 A

- US 7161160 A
- US 7170077 A
- US 7180086 A
- US 7186996 A
- US 7276182 A
- US 6271528 A
- US 6420724 A
- US 6642650 A
- US 6452203 A
- US 6583434 A
- US 6586752 A

**Non-patent literature cited in the description**

- **H. OHUCHI et al.** *Nuclear Instruments and Methods in Physics Research A,* 2002, vol. 490, 580
- **E. PIESCH et al.** Properties of radiophotoluminescent glass dosimeter systems using pulsed laser UV excitation. *Radiat. Prot. Dosim.,* 1986, vol. 17, 293-297

- **MCKEEVER'S.** Thermoluminescence of solids. Cambridge University Press, 1985